(19) Europäisches Patentamt
European Patent Office
Office européen des brevets

(11) **EP 3 007 077 A1**

(12) **EUROPEAN PATENT APPLICATION**
published in accordance with Art. 153(4) EPC

(43) Date of publication:
**13.04.2016 Bulletin 2016/15**

(51) Int Cl.:
***G06F 17/28*** (2006.01)

(21) Application number: **14807128.5**

(22) Date of filing: **23.05.2014**

(86) International application number:
**PCT/JP2014/063667**

(87) International publication number:
**WO 2014/196375 (11.12.2014 Gazette 2014/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.06.2013 JP 2013117146**

(71) Applicant: **National Institute of Information and Communication Technology
Tokyo 184-8795 (JP)**

(72) Inventors:
• **WATANABE, Taro**
Koganei-shi
Tokyo 184-8795 (JP)
• **LIU, Lemao**
Koganei-shi
Tokyo 184-8795 (JP)
• **SUMITA, Eiichiro**
Koganei-shi
Tokyo 184-8795 (JP)

(74) Representative: **Betten & Resch
Patent- und Rechtsanwälte PartGmbB
Maximiliansplatz 14
80333 München (DE)**

(54) **TRANSLATION DEVICE, LEARNING DEVICE, TRANSLATION METHOD, AND RECORDING MEDIUM**

(57) In order to solve a problem that, in the case of using a neural network that non-linearly links features, scores of translation candidates have to be calculated again during search, which requires an inordinate amount of effort, a translation apparatus includes: a parameter storage unit in which a first weight vector that is applied to a non-local feature function and a second weight vector that is applied to a local feature function can be stored: a feature function information storage unit in which non-local first feature function information and local second feature function information can be stored; a portion pair information storage unit in which two or more pieces of portion pair information such as a phrase pair or a rule pair can be stored; a score acquiring unit that acquires scores of two or more target language sentences by introducing a non-linear model to units of a phrase pair, a rule pair, or the like, and limiting the non-linear model to features closed to a phrase pair or a rule pair; a target language sentence acquiring unit that acquires a target language sentence with the largest score; and an output unit that outputs the target language sentence. Accordingly, in machine translation, translation can be precisely performed at high speed.

FIG.1

## Description

Technical Field

The present invention relates to a translation apparatus and the like.

Background Art

For example, conventional translation apparatuses for statistical machine translation and the like are realized by a linear model obtained by combining multiple features, and formalized as a problem that searches for translation with the maximum score of that linear model. With such modeling, an improvement in translation apparatuses is regarded as a problem that develops features contributing to translation, but an evaluation function for evaluating the translation quality and features used in translation apparatuses are not always expressed as a linear relationship. Accordingly, even if a new feature is added to the linear model, the new feature does not necessarily contribute to an improvement in translation apparatuses. Even if a better feature is developed, a contribution to an improvement in translation apparatuses is limited due to restriction of the linear model.

Thus, conventionally, in statistical machine translation, non-linear models have been proposed instead of being limited to linear models (see Non-Patent Documents 1 to 5). In Non-Patent Documents 1 and 2, boosting algorithms are used to realize non-linear translation models, which are used for reranking multiple translation candidates output from translation apparatuses.

Furthermore, in Non-Patent Document 3, neural networks are introduced to translation models expressed as transducers.

In Non-Patent Documents 4 and 5, models are built with a neural network in basic units of translation knowledge such as phrase pairs or rule pairs, which are introduced as reranking or phrase pair-unit features.

Citation List

Non-Patent Document

[Non-Patent Document 1] Kevin Duh and Katrin Kirchhoff. 2008. Beyond log-linear models: Boosted minimum error rate training for n-best reranking. In Proceedings of ACL-08: HLT, Short Papers, pages 37-40, Columbus, Ohio, June. Association for Computational Linguistics.

[Non-Patent Document 2] A. Sokolov, G. Wisniewski, and F. Yvon. 2012. Non-linear n-best list reranking with few features. In AMTA, San Diego, USA.

[Non-Patent Document 3] M. Asuncion Castano, Francisco Casacuberta, and Enrique Vidal. 1997. Machine translation using neural networks and finite-state models. In TMI, pages 160-167.

[Non-Patent Document 4] Le Hai Son, Alexandre Allauzen, and Francois Yvon. 2012. Continuous space translation models with neural networks. In Proceedings of the 2012 Conference of the North American Chapter of the Association for Computational Linguistics: Human Language Technologies, NAACL HLT'12, pages 39-48, Stroudsburg, PA, USA. Association for Computational Linguistics.

[Non-Patent Document 5] Holger Schwenk. 2012. Continuous space translation models for phrase-based statistical machine translation. In Proceedings of the 24th International Conference on Computational Linguistics, COLING'12, Mumbai, India. Association for Computational Linguistics.

Disclosure of Invention

Problems to be Solved by the Invention

However, in conventional translation apparatuses, in the case of using a neural network that non-linearly links features, scores of translation candidates have to be calculated again during search, which requires an inordinate amount of effort.

Moreover, the non-linear models in Non-Patent Documents 1, 2, and 4 and the like are realized as reranking models that select a correct translation from among multiple translation candidates output from existing translation apparatuses. In such reranking models, a correct translation is not always contained in the translation candidates, and, thus, the effect of using the reranking models is limited.

Furthermore, as in Non-Patent Document 3, a method has been proposed that applies a non-linear model to a machine translation apparatus itself, but this method in Non-Patent Document 3 is realized as weighted finite-state transducers, and does not take reordering into consideration, and, thus, it can be applied only to relatively close language pairs such as English and French.

In Non-Patent Documents 3 and 5, non-linear models are built in units of each phrase pair or rule pair, and cannot be optimized in terms of translation in units of a sentence that is generated by combining the phrase pairs or rules. In particular, in the case of combining features that cannot be locally calculated regarding phrase pairs or rule pairs as in an ngram language model or the like, optimization is impossible in Non-Patent Documents 3 and 5.

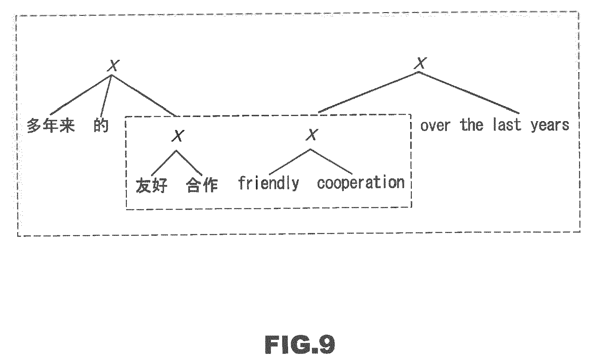

Hereinafter, a problem in conventional techniques will be specifically described using rules shown in FIG. 9. In FIG. 9, a rule $r_1$ is "X → <友好 合作 ; friendly cooperation>", and a rule $r_2$ is "X → <多年来 的 X; X over the last year>".

It is assumed that, in an example of partial translation composed of such rules, a feature vector of each rule is Equation 1 below. In Equation 1, h() is a feature function.

$$h(r_1) = \begin{pmatrix} 0.5 \\ 0.01 \\ -0.5 \end{pmatrix} \qquad h(r_2) = \begin{pmatrix} 0.8 \\ 0.2 \\ -0.1 \end{pmatrix}$$

Equation 1

In this case, a feature vector of this partial translation is as Equation 2 below.

$$h(f, e, d = \{r_1, r_2\}) = h(r_1) + h(r_2) = \begin{pmatrix} 1.3 \\ 0.21 \\ -0.6 \end{pmatrix}$$

Equation 2

It is assumed that the linear model in Equation 3 below is used for scores of the partial translation, and a weight vector W is as in Equation 4. In Equation 3, f is a source language sentence, e is a target language sentence, and d is a derivation, where d contains two or more pieces of portion pair information. The portion pair information is information having source language portion information forming a portion of a source language sentence and target language portion information forming a portion of a target language sentence. The portion pair information is, for example, a phrase pair, a rule pair, a word pair, or the like. In Equations 3 and 4, W is a weight vector. Note that e^ (^ is positioned directly above e) is a target language sentence, and d^ (^ is positioned directly above d) is portion pair information forming a target language sentence (e.g., a phrase pair, a rule pair, etc.).

$$\langle \hat{e}, d \rangle = \arg\max_{(e,d)} W^T \cdot h(f, e, d)$$

Equation 3

$$W = \begin{pmatrix} 0.3 \\ 0.5 \\ 0.1 \end{pmatrix}$$

Equation 4

In this case, the score of this partial translation (f,e,d) is "0.3 × 1.3 + 0.5 × 0.21 + 0.1 × (-0.6) = 0.435".
In the case of a linear model, the total score can be calculated in units of a phrase pair or in units of a rule pair by dynamic programming. For example, the calculation can be performed as in Equation 5.

$$W^T \cdot h(r_1) + W^T \cdot h(r_2) = \begin{pmatrix} 0.3 \\ 0.5 \\ 0.1 \end{pmatrix}^T \cdot \begin{pmatrix} 0.5 \\ 0.01 \\ -0.5 \end{pmatrix} + \begin{pmatrix} 0.3 \\ 0.5 \\ 0.1 \end{pmatrix}^T \cdot \begin{pmatrix} 0.8 \\ 0.2 \\ -0.1 \end{pmatrix}$$

Equation 5

In the case of a non-linear model, for example, it is assumed to use a one-staged neural network as in Equation 6 below. In Equation 6, M is a weight matrix, and B is a u-dimensional bias vector. Note that the weight matrix M is u×K-dimensional. In Equation 6, M and B are shown in Equation 7 below, and σ is a sigmoid function in units of each element (see Equation 8).

$$\langle \hat{e}, \hat{d} \rangle = \arg\max_{(e,d)} W^T \cdot \sigma(M \cdot h(f, e, d) + B)$$

Equation 6

$$M = \begin{pmatrix} 0.5 & 0.3 & 0.1 \\ 0.3 & 0.8 & 0.2 \\ 0.1 & 0.1 & 0.4 \end{pmatrix} \qquad B = \begin{pmatrix} 0.1 \\ -0.3 \\ 0.2 \end{pmatrix}$$

Equation 7

$$sigmoid(x) = \frac{1}{1 + \exp(-x)}$$

Equation 8

In this case, the score of the partial translation is as in Equation 9 below.

$$\begin{pmatrix} 0.3 \\ 0.5 \\ 0.1 \end{pmatrix}^T \cdot \sigma \left\{ \begin{pmatrix} 0.653 \\ 0.438 \\ -0.089 \end{pmatrix} + \begin{pmatrix} 0.1 \\ -0.3 \\ 0.2 \end{pmatrix} \right\} \approx \begin{pmatrix} 0.3 \\ 0.5 \\ 0.1 \end{pmatrix}^T \cdot \begin{pmatrix} 0.68 \\ 0.53 \\ 0.53 \end{pmatrix} = 0.522$$

Equation 9

If the calculation is performed in units of a phrase pair or in units of a rule pair as in a linear model, the score can be expressed by a function S as in Equation 10 below.

$$S(r_1) = \begin{pmatrix} 0.3 \\ 0.5 \\ 0.1 \end{pmatrix}^T \cdot \sigma \left\{ \begin{pmatrix} 0.203 \\ 0.13 \\ -0.149 \end{pmatrix} + \begin{pmatrix} 0.1 \\ -0.3 \\ 0.2 \end{pmatrix} \right\} \approx \begin{pmatrix} 0.3 \\ 0.5 \\ 0.1 \end{pmatrix}^T \begin{pmatrix} 0.58 \\ 0.46 \\ 0.51 \end{pmatrix} = 0.455$$

$$S(r_2) = \begin{pmatrix} 0.3 \\ 0.5 \\ 0.1 \end{pmatrix}^T \cdot \sigma \left\{ \begin{pmatrix} 0.45 \\ 0.38 \\ -0.06 \end{pmatrix} + \begin{pmatrix} 0.1 \\ -0.3 \\ 0.2 \end{pmatrix} \right\} \approx \begin{pmatrix} 0.3 \\ 0.5 \\ 0.1 \end{pmatrix}^T \cdot \begin{pmatrix} 0.63 \\ 0.52 \\ 0.53 \end{pmatrix} = 0.502$$

Equation 10

In this manner, the score of the partial translation obtained by adding calculation results in units of each element is 0.957, which is significantly different from 0.522 even if considering rounding errors. Accordingly, in non-linear models, search methods based on dynamic programming cannot be directly used.

The present invention was arrived at in view of these circumstances, and it is an object thereof to provide a translation apparatus that can efficiently calculate scores of translation candidates by introducing a linear model to a non-local feature function and introducing a non-linear model to a local feature function.

Means for Solving the Problems

A first aspect of the present invention is directed to a translation apparatus, including: a parameter storage unit in which a first weight vector, which is a weight vector that is applied to a non-local feature function, and a second weight vector, which is a weight vector that is applied to a local feature function, can be stored; a feature function information storage unit in which first feature function information, which is information regarding a non-local feature function, and second feature function information, which is information regarding a local feature function, can be stored; a portion pair information storage unit in which two or more pieces of portion pair information, each having source language portion information forming a portion of a source language sentence and target language portion information forming a portion of a target language sentence, can be stored; an accepting unit that accepts a source language sentence; a vector acquiring unit that acquires a first vector by applying, to a non-local feature function indicated by the first feature function information, the source language sentence accepted by the accepting unit and the one or more pieces of portion pair information stored in the portion pair information storage unit, and acquires a second vector by applying, to a local feature function indicated by the second feature function information, one or more words forming the source language sentence accepted by the accepting unit and the one or more pieces of portion pair information stored in the portion pair information storage unit; a score acquiring unit that calculates a non-local score, which is a score that is non-local, using the first vector acquired by the vector acquiring unit and the first weight vector, calculates a local score, which is a score that is local, using the second vector acquired by the vector acquiring unit and the second weight vector, and acquires scores of two or more target language sentences corresponding to the source language sentence accepted by the accepting unit, using the non-local score and the local score; a target language sentence acquiring unit that acquires a target language sentence with the largest score acquired by the score acquiring unit; and an output unit that outputs the target language sentence acquired by the target language sentence acquiring unit.

With this configuration, in machine translation, scores of translation candidates can be efficiently calculated.

Furthermore, a second aspect of the present invention is directed to a translation apparatus according to the first aspect, wherein, in the parameter storage unit, a weight matrix M (u×K-dimensional) and a u-dimensional bias vector B, which are parameters used for calculating the local score, are also stored, the first feature function information is information indicating "h(f,e,d)" (f: source language sentence, e: target language sentence, d: derivation, h: K-dimensional feature function), the second feature function information is information indicating "h'(r)" (r: one element contained in the derivation d, h': K-dimensional feature function), and the score acquiring unit calculates the non-local score using the formula "$W^T \cdot h(f,e,d)$", using the first feature function information (h(f,e,d)) and the first weight vector (W), calculates, for each element (r) of the derivation d, the local score using the formula "$W'^T \cdot \sigma(M \cdot h'(r) + B)$" (where $\sigma$ refers to u sigmoid functions in units of each element), using the second feature function information (W) and the second weight vector "h'(r)", and acquires scores of two or more target language sentences, using Equation 11:

$$W^T \cdot h(f,e,d) + \sum_{r \in d} W'^T \cdot \sigma(M \cdot h'(r) + B)$$

Equation 11.

With this configuration, in machine translation, scores of translation candidates can be efficiently calculated. More specifically, with this configuration, high-speed search as in linear models can be realized by introducing a non-linear model to units of a phrase pair, a rule pair, or the like, and limiting the non-linear model to features closed to a phrase pair or a rule pair.

Furthermore, a third aspect of the present invention is directed to a learning apparatus, including: a parameter storage unit in which a first weight vector (W), which is a weight vector that is applied to a non-local feature function, a second weight vector (W'), which is a weight vector that is applied to a local feature function, and a weight matrix M (u×K-dimensional) and a u-dimensional bias vector B used for calculating a local score, can be stored; an objective function information storage unit in which objective function information, which is information regarding an objective function that is to be maximized for training, can be stored; a first learning unit that performs learning so as to optimize an objective function indicated by the objective function information with "the second weight vector (W') = 0", thereby acquiring an initial first weight vector ($W_1$), which is an initial value of the first weight vector (W); and a second learning unit that performs learning so as to optimize an objective function indicated by the objective function information, using the initial first weight vector ($W_1$) acquired by the first learning unit, thereby acquiring a weight matrix M and a vector B: a third learning unit that performs learning so as to optimize an objective function indicated by the objective function information, using the M and B acquired by the second learning unit, thereby acquiring a first weight vector (W) and a second weight vector (W'): and a parameter accumulating unit that accumulates the first weight vector (W) and the second weight vector (W') acquired by the third learning unit and the weight matrix M and the vector B acquired by the second learning unit, in the parameter storage unit.

With this configuration, in machine translation, a parameter used for efficiently calculating scores of translation candidates can be learned.

Effect of the Invention

With the translation apparatus according to the present invention, in machine translation, scores of translation candidates can be efficiently calculated.

Brief Description of the Drawings

FIG. 1 is a block diagram of a translation apparatus 1 in Embodiment 1 of the present invention.
FIG. 2 is a flowchart illustrating an operation of the translation apparatus 1 in Embodiment 1 of the present invention.
FIG. 3 is a table showing experimental results in Embodiment 1 of the present invention.
FIG. 4 is a table showing experimental results in Embodiment 1 of the present invention.
FIG. 5 is a block diagram of a learning apparatus 2 in Embodiment 2 of the present invention.
FIG. 6 is a flowchart illustrating an operation of the learning apparatus 2 in Embodiment 2 of the present invention.
FIG. 7 is a schematic view of a computer system in the foregoing embodiments of the present invention.
FIG. 8 is a block diagram of the computer system in the embodiments of the present invention.
FIG. 9 is a diagram specifically illustrating a problem of conventional techniques.

Description of Embodiments

Hereinafter, embodiments of a translation apparatus and the like of the present invention will be described with reference to the drawings. Note that constituent elements denoted by the same reference numerals perform similar operations in the embodiments, and, thus, a description thereof may not be repeated.

Embodiment 1

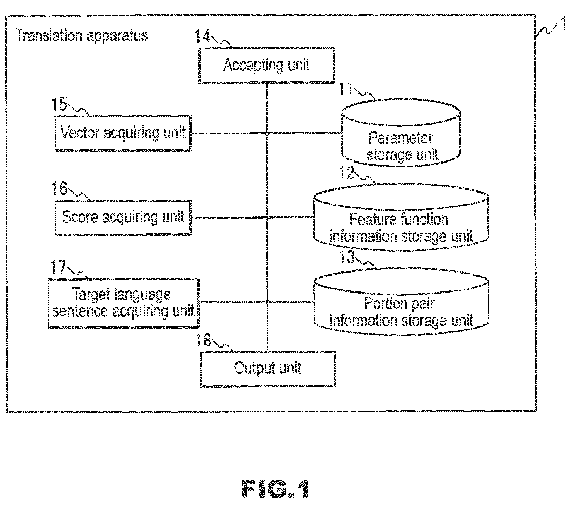

In this embodiment, a translation apparatus 1 that acquires a target language sentence by introducing a linear model to a non-local feature function and introducing a non-linear model to a local feature function will be described with reference to FIG. 1. The translation apparatus 1 is typically an apparatus that performs statistical machine translation. The translation apparatus 1 may be an apparatus that performs phrase-based statistical machine translation, or may be an apparatus that performs other statistical machine translation.

FIG. 1 is a block diagram of the translation apparatus 1 in this embodiment. The translation apparatus 1 includes a parameter storage unit 11, a feature function information storage unit 12, a portion pair information storage unit 13, an accepting unit 14, a vector acquiring unit 15, a score acquiring unit 16, a target language sentence acquiring unit 17, and an output unit 18.

In the parameter storage unit 11, parameters can be stored. The parameters are, for example, a first weight vector (hereinafter, it may be referred to as " W ") and a second weight vector (hereinafter, it may be referred to as " W'"). The first the weight vector (W) is a weight vector that is applied to a non-local feature function. The second weight vector (W') is a weight vector that is applied to a local feature function.

Furthermore, the parameters preferably include, for example, a weight matrix (hereinafter, it may be referred to as "M") and a u-dimensional bias vector (hereinafter, it may be referred to as "B"). The weight matrix M is $u \times K$-dimensional, u is the number of outputs of a neural network and is the number of dimensions of W', and K is the number of features, which are inputs of a neural network.

In the feature function information storage unit 12, first feature function information and second feature function information can be stored. The first feature function information is information regarding a non-local feature function, and is, for example, information indicating "h(f,e,d)", where "h(f,e,d)" is a K-dimensional feature function, f is a source language sentence, e is a target language sentence, and d is a derivation. Note that d contains two or more pieces of portion pair information. The portion pair information is, for example, a phrase pair, a rule pair, or the like. The second feature function information is information regarding a local feature function, and is, for example, information indicating "h'(r)" (r: one element contained in the derivation d, and h': K-dimensional feature function).

In the portion pair information storage unit 13, one or at least two pieces of portion pair information can be stored. The portion pair information is, as described above, information having source language portion information forming a portion of a source language sentence and target language portion information forming a portion of a target language sentence, and is, for example, a phrase pair, a rule pair, a word pair, or the like.

The accepting unit 14 accepts a source language sentence. The accepting is a concept that encompasses accepting information input from an input device such as a keyboard, a mouse, or a touch panel, receiving information transmitted via a wired or wireless communication line, accepting information read from a storage medium such as an optical disk, a magnetic disk, or a semiconductor memory, and the like. The source language sentence may be input through any means such as a keyboard, a mouse, a menu screen, or the like.

The vector acquiring unit 15 acquires a first vector and a second vector, using the source language sentence accepted by the accepting unit 14 and the one or more pieces of portion pair information stored in the portion pair information storage unit 13. More specifically, the vector acquiring unit 15 acquires a first vector by applying the source language sentence and the one or more pieces of portion pair information to a non-local feature function indicated by the first feature function information. The vector acquiring unit 15 acquires a second vector by applying one or more words forming the source language sentence and the one or more pieces of portion pair information to a local feature function indicated by the second feature function information. The non-local feature is, for example, an ngram language model, a dependency structure language model, a phrase structure language model, a syntactic language model, or the like. The local feature is, for example, a word embedding feature, the number of phrase pairs or rule pairs, the number of words, a generation probability, a conditional probability on the source language side, a conditional probability on the target language side, a source language-side lexicon probability, a target language-side lexicon probability, or the like.

The score acquiring unit 16 calculates a non-local score, which is a score that is non-local, using the first vector acquired by the vector acquiring unit 15 and the first weight vector. Specifically, for example, the score acquiring unit 16 calculates a non-local score using the formula "$W^T \cdot h(f,e,d)$", using the first feature function information (h(f,e,d)) and the first weight vector (W).

Furthermore, the score acquiring unit 16 calculates a local score using the non-linear model. Specifically, the score acquiring unit 16 calculates a local score, which is a score that is local, using the second vector acquired by the vector acquiring unit 15 and the second weight vector. Specifically, for example, the score acquiring unit 16 calculates, for each element (r) of the derivation d, a local score using the formula "$W'^T \cdot \sigma (M \cdot h'(r) + B)$" (where $\sigma$ refers to u sigmoid functions in units of each element), using the second feature function information (W') and the second weight vector "h'(r)".

Moreover, the score acquiring unit 16 acquires scores of two or more target language sentences corresponding to the source language sentence accepted by the accepting unit 14, using the non-local score and the local score. Specifically, for example, the score acquiring unit 16 acquires scores of two or more target language sentences, using Equation 11. There is no limitation on the manner in which score acquiring unit 16 uses Equation 11.

The target language sentence acquiring unit 17 acquires a target language sentence with the largest score acquired by the score acquiring unit 16.

The output unit 18 outputs the target language sentence acquired by the target language sentence acquiring unit 17. The output is a concept that encompasses display on a display screen, projection using a projector, printing in a printer, output of a sound, transmission to an external apparatus, accumulation in a storage medium, delivery of a processing result to another processing apparatus or another program, and the like.

Accordingly, the translation apparatus 1 can be said to be an apparatus that acquires and outputs a target language sentence that satisfies Equation 12 below. It is assumed that the model in Equation 12 is referred to as an AddNN model (additive neural network model).

$$\langle \hat{e}, \hat{d} \rangle = \arg\max_{(e,d)} W^{T} \cdot h(f, e, d) + \sum_{r \in d} W'^{T} \cdot \sigma(M \cdot h'(r) + B)$$

Equation 12

In Equation 12, e^ (^ is positioned directly above e) is a target language sentence, and d^ (^ is positioned directly above d) is portion pair information forming a target language sentence (e.g., a phrase pair, a rule pair, etc.). In h'O, features that are calculated closed to units of portion pair information such as each phrase pair or rule pair are assumed. Furthermore, h()linearly combines features that are calculated based on multiple pieces of portion pair information such as multiple phrases or rule pairs, such as an ngram language model.

That is to say, the translation apparatus 1 realizes high-speed search as in linear models by introducing a non-linear model to units of portion pair information such as a phrase pair or a rule pair, and limiting the non-linear model to features closed to portion pair information such as a phrase pair or a rule pair.

The parameter storage unit 11, the feature function information storage unit 12, and the portion pair information storage unit 13 are preferably realized by a non-volatile storage medium, but may be realized also by a volatile storage medium.

There is no limitation on the procedure in which the parameters and the like are stored in the parameter storage unit 11 and the like. For example, the parameters and the like may be stored in the parameter storage unit 11 and the like via a storage medium, the parameters and the like transmitted via a communication line or the like may be stored in the parameter storage unit 11 and the like, or the parameters and the like input via an input device may be stored in the parameter storage unit 11 and the like.

The accepting unit 14 may be realized by a device driver for an input part such as a keyboard, control software for a menu screen, or the like.

The vector acquiring unit 15, the score acquiring unit 16, and the target language sentence acquiring unit 17 may be realized typically by an MPU, a memory, or the like. Typically, the processing procedure of the vector acquiring unit 15 and the like is realized by software, and the software is stored in a storage medium such as a ROM. Note that the processing procedure of the vector acquiring unit 15 and the like may be realized also by hardware (a dedicated circuit).

The output unit 18 may be considered to include or not to include an output device such as a display screen or a loudspeaker. The output unit 18 may be realized, for example, by driver software for an output device, a combination of driver software for an output device and the output device, or the like.

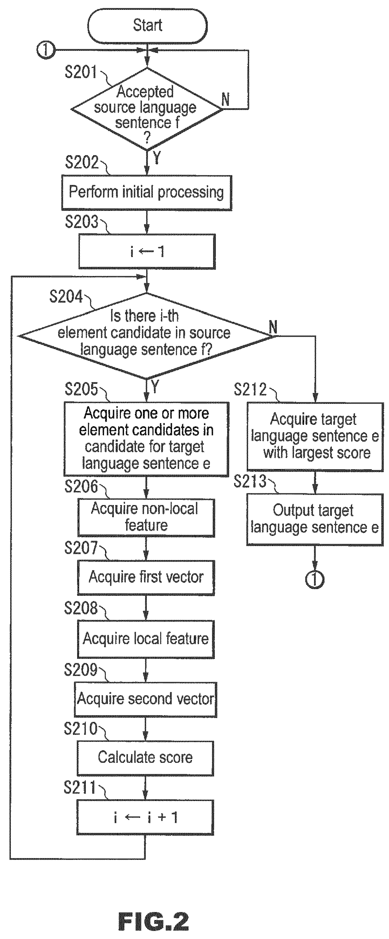

Next, an example of an operation of the translation apparatus 1 will be described with reference to the flowchart in FIG. 2.

(Step S201) The accepting unit 14 judges whether or not a source language sentence f has been accepted. If the source language sentence f has been accepted, the procedure advances to step S202, and, if not, the procedure returns to step S201.

(Step S202) The vector acquiring unit 15 performs initial processing. The initial processing is, for example, reading the first weight vector (W), the second weight vector (W'), the weight matrix (M), and the vector (B) from the parameter storage unit 11, and reading the first feature function information and the second feature function information from the feature function information storage unit 12.

(Step S203) The vector acquiring unit 15 substitutes 1 for a counter i.

(Step S204) The vector acquiring unit 15 judges whether or not there is an i-th element candidate in the source language sentence f. If there is an i-th element candidate, the procedure advances to step S205, and, if not, the procedure advances to step S212. The element candidate in the source language sentence f is source language portion information forming a portion of the source language sentence (e.g., a phrase forming the source language sentence f).

(Step S205) The vector acquiring unit 15 acquires one or more element candidates in candidates for the target language sentence e corresponding to the i-th element candidate in the source language sentence f, from the portion pair information storage unit 13. The one or more element candidates in candidates for the target language sentence e are target language portion information.

(Step S206) The vector acquiring unit 15 acquires one or more non-local features of a target language sentence containing the one or more element candidates acquired in step S205.

(Step S207) The vector acquiring unit 15 acquires a first vector by applying the one or more features acquired in step S206 to the first feature function information.

(Step S208) The vector acquiring unit 15 acquires one or more local features in the one or more element candidates acquired in step S205.

(Step S209) The vector acquiring unit 15 acquires a second vector by applying the one or more features acquired in step S208 to the second feature function information.

(Step S210) The score acquiring unit 16 calculates a non-local score, which is a score that is non-local, using the first vector and the first weight vector. The score acquiring unit 16 calculates a local score, which is a score that is local, using the second vector and the second weight vector. Moreover, the score acquiring unit 16 calculates a score using the non-local score and the local score. The score calculation by the score acquiring unit 16 is performed, for example, using Equation 11.

(Step S211) The score acquiring unit 16 increments the counter i by 1, and the procedure returns to step S204.

(Step S212) The target language sentence acquiring unit 17 acquires a target language sentence with the largest score acquired by the score acquiring unit 16, among the one or at least two candidates for the target language sentence e.

(Step S213) The output unit 18 outputs the target language sentence e acquired in step S212, and the procedure returns to step S201.

Note that the procedure is terminated by powering off or an interruption at completion of the process in the flowchart in FIG. 2.

Experiments

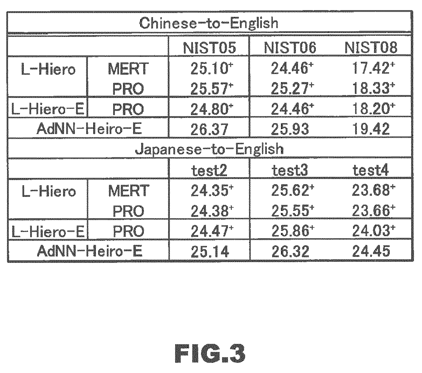

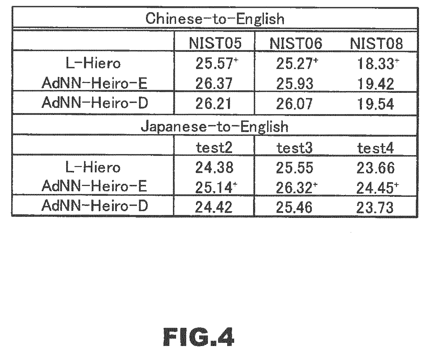

Hereinafter, experimental results of the translation apparatus 1 in this embodiment will be described. This experiment was performed using Chinese-English translation from Chinese to English (Chinese-to-English) and Japanese-English translation from Japanese to English (Japanese-to-English). FIGS. 3 and 4 show the experimental result. As described later, FIGS. 3 and 4 show experimental results showing evaluation of the performance of translation in each model, in the Chinese-English translation and the Japanese-English translation.

In Chinese-English translation (Chinese-to-English in FIGS. 3 and 4), an FBIS corpus (new domain) having 240K pairs of original and translated sentences were used as training data. NIST02 evaluation data was used as a development set. NIST05 was used as development test data. NIST06 and NIST08 were used as test data sets. The NIST02, 05, 06, and 08 evaluation data respectively consisted of 878 sentences, 1082 sentences, 1664 sentences, and 1357 sentences selected from articles of various topics such as newspaper articles or blog articles, wherein each sentence was provided with four English reference translations.

In Japanese-English translation (Japanese-to-English in FIGS. 3 and 4), 300K pairs of original and translated sentences were used as training data. The pairs of original and translated sentences were obtained from NTCIR patent task (see "Atsushi Fujii, Masao Utiyama, Mikio Yamamoto, and Takehito Utsuro. 2010. Overview of the patent translation task at the ntcir-8 workshop. In Proceedings of the 8th NTCIR Workshop Meeting on Evaluation of Information Access Technologies: Information Retrieval, Question Answering and Cross-lingual Information Access, pages 293-302."). Development set, development test data, and two test data sets were extracted from 4000 sentences in average. These four data sets were taken as test1, test2, test3, and test4. FIGS. 3 and 4 shows results of test2, test3, and test4.

In this experiment, in order to acquire word alignment in each sentence pair, GIZA++ (see "Franz Josef Och and Hermann Ney. 2000. Improved statistical alignment models. In Proceedings of the 38th Annual Meeting on Association for Computational Linguistics, ACL'00, pages 440-447, Stroudsburg, PA, USA. Association for Computational Linguistics.") was run in both directions on the training corpus.

Furthermore, in order to modify Kneser-Ney smoothing, an SRILM tool kit (see "Andreas Stolcke. 2002. Srilm - an extensible language modeling toolkit. In Proc. of ICSLP.") was used. Furthermore, for Chinese-English translation (Xinhua portion of the English Gigaword corpus), a 4-gram language model was trained. For Japanese-English translation on the target side of the training data, a 4-gram language model was trained.

In this experiment, in order to evaluate the translation performance, case-sensitive BLEU4 metric 4 (see "Kishore Papineni, Salim Roukos, Todd Ward, and Wei-Jing Zhu. 2002. BLEU: a method for automatic evaluation of machine translation. In Proceedings of 40th Annual Meeting of the Association for Computational Linguistics, pages 311-318, Philadelphia, Pennsylvania, USA, July. Association for Computational Linguistics.") was used. The significance test was performed using paired bootstrap re-sampling (see "Philipp Koehn. 2004b. Statistical significance tests for machine translation evaluation. In Proc. of EMNLP.ACL.").

Furthermore, an in-house hierarchical phrase-based translation system (see "David Chiang. 2005. A hierarchical phrase-based model for statistical machine translation. In Proceedings of the 43rd Annual Meeting on Association for Computational Linguistics, ACL'05, pages 263-270, Stroudsburg, PA, USA. Association for Computational Linguistics.") was used as the baseline system. This system had settings similar to those of Hiero (see "David Chiang. 2005. A hierarchical phrase-based model for statistical machine translation. In Proceedings of the 43rd Annual Meeting on Association for Computational Linguistics, ACL'05, pages 263-270, Stroudsburg, PA, USA. Association for Computational Linguistics."), such as "beam size = 100" and "kbest size = 100", and is referred to as L-Hiero (see FIGS. 3 and 4) in order to emphasize the log-linear model. In this experiment, L-Hiero was tuned with two methods MERT and PRO (see FIG. 3) implemented in the Moses tool kit.

Furthermore, in this experiment, the word embedding feature amounts were integrated into the log-linear model along with the default feature amounts in L-Hiero (hereinafter, referred to as L-Hiero-E (see FIG. 3)). L-Hiero-E was tuned with PRO (see FIG. 3) implemented in the Moses tool kit.

The translation apparatus 1 is an implementation of the above-described AddNN model, had the same codebase and settings as those in L-Hiero in this experiment, and is referred to as AdNN-Hiero-E (see FIGS. 3 and 4).

FIG. 3 shows experimental results in this case. In FIG. 3, " +" means that there was a significant difference in comparison with AdNN-Hiero-E with the probability "p<0.05" in the bootstrap method.

Furthermore, an experiment was performed also using AdNN-Hiero-D. AdNN-Hiero-D is such that a non-local function among feature functions h is used as h' as it is. The non-local function is for, for example, the number of phrase pairs or rule pairs, the number of words, a generation probability, a conditional probability on the source language side, a conditional probability on the target language side, a source language-side lexicon probability, a target language-side lexicon probability, or the like.

FIG. 4 shows experimental results of the comparison between L-Hiero, AdNN-Hiero-E, and AdNN-Hiero-D. In FIG. 4, "+" means that there was a significant difference in comparison with AdNN-Hiero-D with the probability "p<0.05" in the bootstrap method.

As described above, with this embodiment, in machine translation, scores of translation candidates can be efficiently calculated.

More specifically, according to this embodiment, high-speed search as in linear models can be realized by introducing a non-linear model to units of a phrase pair, a rule pair, or the like, and limiting the non-linear model to features closed to a phrase pair or a rule pair.

Note that, in this embodiment, there is no limitation on the translation method and the translation algorithm used by the translation apparatus 1. There is no limitation on the source language and the target language in translation that is to be performed by the translation apparatus 1.

Furthermore, the translation apparatus 1 of this embodiment is regarded as adding u-dimensional features to each phrase pair or rule pair of conventional statistical machine translation systems, and the translation apparatus 1 can be easily extended. In the translation apparatus 1, any feature can be introduced and combined even if that feature is not a feature assuming a linear model, and, thus, the possibility that better translation is generated increases. That is to say, if "W' = 0", the AddNN model is reduced to a linear model, and is totally the same as a machine translation system based on conventional linear models. Accordingly, the AddNN model is realized merely by adding a non-linear model to a conventional system. In the AddNN model, if M and B are set to constant fixed values, elements of the non-linear model can be regarded as a u-dimensional feature function, which can be as a whole regarded as a linear model having (W,W') as a weight vector. This corresponds to increasing the number of dimensions of a feature function in units of a phrase pair, a rule pair, or the like, by u. Accordingly, in the translation apparatus 1, a machine translation system based on a conventional linear model can be easily extended. Although having units of a phrase pair, a rule pair, or the like, the AddNN model is a non-linear model, and, thus, any features can be introduced thereto. For example, features such as word embedding features expressing each word as a multi-dimensional feature amount can be easily introduced.

This additive neural network is defined in units of a sentence, and linearly links a linear model of the whole sentence and a non-linear model in units of an element. Accordingly, during estimation of parameters, better parameters can be estimated by introducing a loss function of the whole sentence and directly transferring errors thereof to parameters in units of an element such as a phrase pair or a rule pair.

The processing in this embodiment may be realized using software. The software may be distributed by software download or the like. Furthermore, the software may be distributed in a form where the software is stored in a storage medium such as a CD-ROM. Note that the same is applied to other embodiments described in this specification. The software that realizes the translation apparatus 1 in this embodiment may be the following sort of program. Specifically, this program is a program for causing a computer-accessible storage medium to have: a parameter storage unit in which a first weight vector, which is a weight vector that is applied to a non-local feature function, and a second weight vector, which is a weight vector that is applied to a local feature function, can be stored: a feature function information storage unit in which first feature function information, which is information regarding a non-local feature function, and second feature function information, which is information regarding a local feature function, can be stored; and a portion pair information storage unit in which two or more pieces of portion pair information, each having source language portion information forming a portion of a source language sentence and target language portion information forming a portion of a target language sentence, can be stored; and causing a computer to function as: an accepting unit that accepts a source language sentence; a vector acquiring unit that acquires a first vector by applying, to a non-local feature function indicated by the first feature function information, the source language sentence accepted by the accepting unit and the one or more pieces of portion pair information stored in the portion pair information storage unit, and acquires a second vector by applying, to a local feature function indicated by the second feature function information, one or more words forming the source language sentence accepted by the accepting unit and the one or more pieces of portion pair information stored in the portion pair information storage unit; a score acquiring unit that calculates a non-local score, which is a score that is non-local, using the first vector acquired by the vector acquiring unit and the first weight vector, calculates a local score, which is a score that is local, using the second vector acquired by the vector acquiring unit and the second weight vector, and acquires scores of two or more target language sentences corresponding to the source language sentence accepted by the accepting unit, using the non-local score and the local score; a target language sentence acquiring unit that acquires a target language sentence with the largest score acquired by the score acquiring unit; and an output unit that outputs the target language sentence acquired by the target language sentence acquiring unit.

It is preferable that the program causes the computer to operate such that, in the parameter storage unit, a weight matrix M ($u \times K$-dimensional) and a u-dimensional bias vector B, which are parameters used for calculating the local score, are also stored, the first feature function information is information indicating "h(f,e,d)" (f source language sentence, e: target language sentence, d: derivation, h: K-dimensional feature function), the second feature function information is information indicating "h'(r)" (r: one element contained in the derivation d, h': K-dimensional feature function), and the score acquiring unit calculates the non-local score using the formula "$W^T \cdot h(f,e,d)$", using the first feature function information (h(f,e,d)) and the first weight vector (W), calculates, for each element (r) of the derivation d, the local score using the formula "$W^T \cdot \sigma (M \cdot h'(r) + B)$" (where $\sigma$ refers to u sigmoid functions in units of each element), using the second feature function information (W) and the second weight vector "h'(r)", and acquires scores of two or more target language sentences, using Equation 11.

## Embodiment 2

In this embodiment, a learning apparatus 2 that learns parameters for use in the translation apparatus 1 will be described.

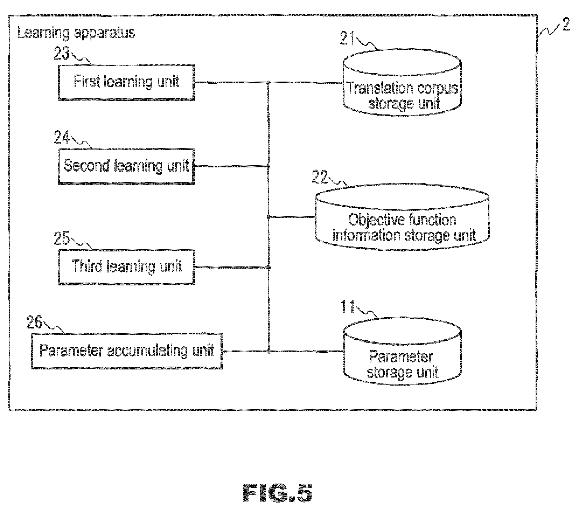

FIG. 5 is a block diagram of the learning apparatus 2 in this embodiment. The learning apparatus 2 includes the parameter storage unit 11, a translation corpus storage unit 21, an objective function information storage unit 22, a first learning unit 23, a second learning unit 24, a third learning unit 25, and a parameter accumulating unit 26.

In the parameter storage unit 11, the first weight vector (W), the second weight vector (W'), the weight matrix M ($u \times K$-dimensional), and the vector B (u-dimensional) can be stored as described above.

In the translation corpus storage unit 21, a translation corpus can be stored. The translation corpus refers to two or more pairs of a source language sentence (f) and a target language sentence (e). A translation of the source language sentence is the target language sentence that is paired with this source language sentence.

In the objective function information storage unit 22, objective function information, which is information regarding an objective function that is to be maximized for training, can be stored. The objective function is a function used for training a linear model, and there are various types of such objective functions. The objective function is as in Equation 13, for example. The objective function in Equation 13 has several thousands of parameters, and, in tuning in statistical machine translation, a parameter group that minimizes this objective function is determined.

$$\frac{1}{2}\|\theta\|^2 + \frac{\lambda}{N}\sum_f \sum_{e^*,d^*,e',d'} \delta(f,e^*,d^*,e',d';\theta),$$

with

$$\delta(\cdot) = \max\{S(f,e',d';\theta) - S(f,e^*,d^*;\theta) + 1, 0\} \qquad \text{Equation 13}$$

In Equation 13, f is a source language sentence in a given development set (it is the same as a translation corpus), <<e*,d*><e',d'>> is a translation candidate pair sampled at random from a k-best list obtained by decoding f, and the BLEU score of <e*,d*> is higher than that of <e',d'>. N is the number of such pairs, and $\lambda$ is a hyper parameter that is larger than 0. $\theta$ is a parameter group that is to be learned. The function $\delta$ is a hinge loss function, and, if the score $S(f,e',d'; \theta)$ of a translation candidate with a low BLEU score is higher than the score $S(f,e^*,d^*; \theta)$ of a translation candidate with a high BLEU score, the difference between these scores is used as it is as the loss amount.

The first learning unit 23 performs learning so as to optimize an objective function indicated by the objective function information with "the second weight vector (W') = 0", thereby acquiring an initial first weight vector ($W_1$), which is an initial value of the first weight vector (W). This learning processing is referred to as first learning processing. There are various learning methods that are performed by the first learning unit 23, but, for example, they can be realized by known techniques such as MERT, MIRA, and PRO. Regarding MERT, see "Franz Josef Och. 2003. Minimum error rate training in statistical machine translation. In Proceedings of the 41st Annual Meeting of the Association for Computational Linguistics, pages 160-167, Sapporo, Japan, July. Association for Computational Linguistics.". Regarding MIRA, see "Taro Watanabe, Jun Suzuki, Hajime Tsukada, and Hideki Isozaki. 2007. Online large-margin training for statistical machine translation. In Proceedings of the 2007 Joint Conference on Empirical Methods in Natural Language Processing and Computational Natural Language Learning (EMNLP-CoNLL), pages 764-773, Prague, Czech Republic, June. Association for Computational Linguistics.". Regarding PRO, see "Mark Hopkins and Jonathan May. 2011. Tuning as ranking. In Proceedings of the 2011 Conference on Empirical Methods in Natural Language Processing, pages 1352-1362, Edinburgh, Scotland, UK., July. Association for Computational Linguistics.".

The second learning unit 24 performs learning so as to optimize an objective function indicated by the objective function information, using the initial first weight vector ($W_1$) acquired by the first learning unit 23, thereby acquiring a weight matrix M and a vector B. The learning method performed by the second learning unit 24 is typically similar to the learning method performed by the first learning unit 23. This learning processing is referred to as second learning processing.

The third learning unit 25 performs learning so as to optimize an objective function indicated by the objective function information, using the weight matrix M and the vector B acquired by the second learning unit 24, thereby acquiring a first weight vector (W) and a second weight vector (W'). The learning method performed by the third learning unit 25 is typically similar to the learning method performed by the first learning unit 23 and the second learning unit 24. This learning processing is referred to as third learning processing.

The parameter accumulating unit 26 accumulates the first weight vector (W) and the second weight vector (W') acquired by the third learning unit 25 and the weight matrix M and the vector B acquired by the second learning unit 24, in the parameter storage unit 11.

The translation corpus storage unit 21 and the objective function information storage unit 22 are preferably realized by a non-volatile storage medium, but may be realized also by a volatile storage medium.

There is no limitation on the procedure in which the translation corpus and the like are stored in the translation corpus storage unit 21 and the objective function information storage unit 22. For example, the translation corpus and the like may be stored in the translation corpus storage unit 21 via a storage medium, the translation corpus and the like transmitted via a communication line or the like may be stored in the translation corpus storage unit 21, or the translation corpus and the like input via an input device may be stored in the translation corpus storage unit 21.

The first learning unit 23, the second learning unit 24, the third learning unit 25, and the parameter accumulating unit 26 may be realized typically by an MPU, a memory, or the like. Typically, the processing procedure of the first learning unit 23 and the like is realized by software, and the software is stored in a storage medium such as a ROM. Note that the processing procedure of the first learning unit 23 and the like may be realized also by hardware (a dedicated circuit).

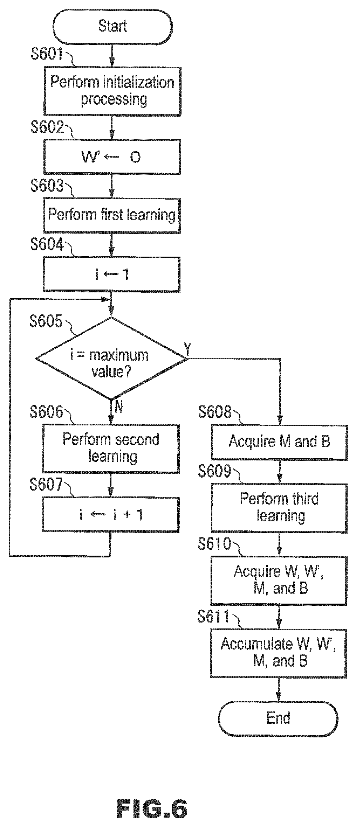

Next, an operation of the learning apparatus 2 will be described with reference to the flowchart in FIG. 6.

(Step S601) The first learning unit 23 performs initialization processing. The initialization processing is, for example, setting the number of iterations (MaxIter) of second learning processing, acquiring the development set, setting a parameter (e.g., $\lambda$ in Equation 13), or the like.

(Step S602) The first learning unit 23 substitutes 0 for the second weight vector (W').

(Step S603) The first learning unit 23 performs learning so as to optimize an objective function indicated by the objective function information stored in the objective function information storage unit 22, thereby acquiring an initial first weight vector ($W_1$), which is an initial value of the first weight vector (W). That is to say, the first learning unit 23 acquires an initial parameter "$\theta_1 = (W,W' = 0,M,B)$". This learning is referred to as first learning processing.

(Step S604) The second learning unit 24 substitutes 1 for a counter i.

(Step S605) The second learning unit 24 judges whether or not "i = maximum value (MaxIter) of the number of iterations". If "i = maximum value", the procedure advances to step S608, and, if not, the procedure advances to step S606.

(Step S606) The second learning unit 24 performs learning so as to optimize an objective function indicated by the objective function information, using the initial first weight vector ($W_1$) acquired by the first learning unit 23, thereby acquiring a weight matrix M and a vector B in the i-th second learning processing. More specifically, the second learning unit 24 decodes the development set using a parameter $\theta_i$, and merges all k-best lists. Next, the second learning unit 24 obtains a parameter $\theta_{i+1}$ using the merged k-best lists, for example, using a learning method such as PRO.

(Step S607) The second learning unit 24 increments the counter i by 1, and the procedure returns to step S605.

(Step S608) The third learning unit 25 acquires the weight matrix M and the vector B acquired last by the second learning unit 24.

(Step S609) The third learning unit 25 performs learning so as to optimize an objective function indicated by the objective function information, using the weight matrix M and the vector B acquired last by the second learning unit 24. This learning processing is referred to as third learning processing.

(Step S610) The third learning unit 25 acquires θ(W,W',M,B), which is a result of the third learning processing.

(Step S611) The parameter accumulating unit 26 accumulates the θ(W,W',M,B) acquired by the third learning unit 25, in the parameter storage unit 11, and the procedure is ended.

In the flowchart in FIG. 6, the learning methods performed by the first learning unit 23, the second learning unit 24, and the third learning unit 25 are typically the same. There is no limitation on the learning method performed by the first learning unit 23, the second learning unit 24, and the third learning unit 25.

As described above, with this embodiment, parameters for use in the translation apparatus 1 can be efficiently learned.

The processing in this embodiment may be realized using software. The software may be distributed by software download or the like. Furthermore, the software may be distributed in a form where the software is stored in a storage medium such as a CD-ROM. Note that the same is applied to other embodiments described in this specification. The software that realizes the learning apparatus 2 in this embodiment may be the following sort of program. Specifically, this program is a program for causing a computer-accessible storage medium to have: a parameter storage unit in which a first weight vector (W), which is a weight vector that is applied to a non-local feature function, a second weight vector (W'), which is a weight vector that is applied to a local feature function, and a weight matrix M (u×K-dimensional) and a u-dimensional bias vector B used for calculating a local score, can be stored; and an objective function information storage unit in which objective function information, which is information regarding an objective function that is to be maximized for training, can be stored; and causing a computer to function as: a first learning unit that performs learning so as to optimize an objective function indicated by the objective function information with "the second weight vector (W') = 0", thereby acquiring an initial first weight vector ($W_1$), which is an initial value of the first weight vector (W); a second learning unit that performs learning so as to optimize an objective function indicated by the objective function information, using the initial first weight vector ($W_1$) acquired by the first learning unit, thereby acquiring a weight matrix M and a vector B; a third learning unit that performs learning so as to optimize an objective function indicated by the objective function information, using the M and B acquired by the second learning unit, thereby acquiring a first weight vector (W) and a second weight vector (W'); and a parameter accumulating unit that accumulates the first weight vector (W) and the second weight vector (W') acquired by the third learning unit and the weight matrix M and the vector B acquired by the second learning unit, in the parameter storage unit.

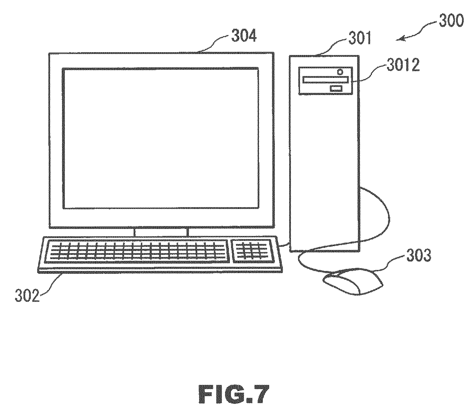

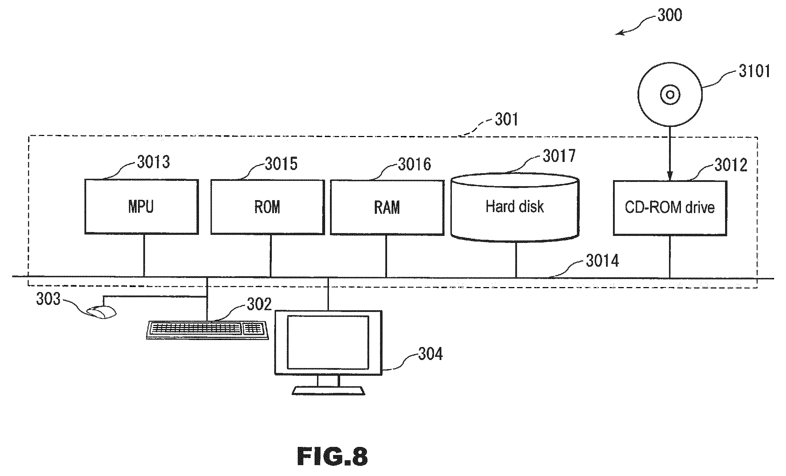

FIG. 7 shows the external appearance of a computer that executes the programs described in this specification to realize the translation apparatus 1 or the learning apparatus 2 in the foregoing various embodiments. The foregoing embodiments may be realized using computer hardware and a computer program executed thereon. FIG. 7 is a schematic view of a computer system 300. FIG. 8 is a block diagram of the computer system 300.

In FIG. 7, the computer system 300 includes a computer 301 including a CD-ROM drive, a keyboard 302, a mouse 303, and a monitor 304.

In FIG. 8, the computer 301 includes not only the CD-ROM drive 3012, but also an MPU 3013, a bus 3014 connected to the MPU 3013 and the CD-ROM drive 3012, a ROM 3015 in which a program such as a boot up program is to be stored, a RAM 3016 that is connected to the MPU 3013 and is a memory in which a command of an application program is temporarily stored and a temporary storage area is to be provided, and a hard disk 3017 in which an application program, a system program, and data are to be stored. Although not shown, the computer 301 may further include a network card that provides connection to a LAN.

The program for causing the computer system 300 to execute the functions of the translation apparatus and the like in the foregoing embodiments may be stored in a CD-ROM 3101 that is inserted into the CD-ROM drive 3012, and be transmitted to the hard disk 3017. Alternatively, the program may be transmitted via a network (not shown) to the computer 301 and stored in the hard disk 3017. At the time of execution, the program is loaded into the RAM 3016. The program may be loaded from the CD-ROM 3101, or directly from a network.

The program does not necessarily have to include, for example, an operating system (OS) or a third party program to cause the computer 301 to execute the functions of the translation apparatus and the like in the foregoing embodiments. The program may only include a command portion to call an appropriate function (module) in a controlled mode and obtain the desired results. The manner in which the computer system 300 operates is well known, and, thus, a detailed description thereof has been omitted.

Furthermore, the computer that executes this program may be a single computer, or may be multiple computers. That is to say, centralized processing may be performed, or distributed processing may be performed.

Furthermore, in the foregoing embodiments, each processing (each function) may be realized as centralized processing using a single apparatus (system), or may be realized as distributed processing using multiple apparatuses.

It will be appreciated that the present invention is not limited to the embodiments set forth herein, and various modifications are possible within the scope of the present invention.

Industrial Applicability

As described above, the translation apparatus according to the present invention has an effect that scores of translation candidates can be efficiently calculated, and, thus, this apparatus is useful as a statistical machine translation apparatus and the like.

List of Reference Numerals

| | |
|---|---|
| 1 | Translation apparatus |
| 2 | Learning apparatus |
| 11 | Parameter storage unit |
| 12 | Feature function information storage unit |
| 13 | Portion pair information storage unit |
| 14 | Accepting unit |
| 15 | Vector acquiring unit |
| 16 | Score acquiring unit |
| 17 | Target language sentence acquiring unit |
| 18 | Output unit |
| 21 | Translation corpus storage unit |
| 22 | Objective function information storage unit |
| 23 | First learning unit |
| 24 | Second learning unit |
| 25 | Third learning unit |
| 26 | Parameter accumulating unit |

**Claims**

1.  A translation apparatus, comprising:

     a parameter storage unit in which a first weight vector, which is a weight vector that is applied to a non-local feature function, and a second weight vector, which is a weight vector that is applied to a local feature function, can be stored;
     a feature function information storage unit in which first feature function information, which is information regarding a non-local feature function, and second feature function information, which is information regarding a local feature function, can be stored;
     a portion pair information storage unit in which two or more pieces of portion pair information, each having source language portion information forming a portion of a source language sentence and target language portion information forming a portion of a target language sentence, can be stored;
     an accepting unit that accepts a source language sentence;
     a vector acquiring unit that acquires a first vector by applying, to a non-local feature function indicated by the first feature function information, the source language sentence accepted by the accepting unit and the one or more pieces of portion pair information stored in the portion pair information storage unit, and acquires a second vector by applying, to a local feature function indicated by the second feature function information, one or more words forming the source language sentence accepted by the accepting unit and the one or more pieces of portion pair information stored in the portion pair information storage unit;
     a score acquiring unit that calculates a non-local score, which is a score that is non-local, using the first vector acquired by the vector acquiring unit and the first weight vector, calculates a local score, which is a score that is local, using the second vector acquired by the vector acquiring unit and the second weight vector, and acquires scores of two or more target language sentences corresponding to the source language sentence accepted by the accepting unit, using the non-local score and the local score;
     a target language sentence acquiring unit that acquires a target language sentence with the largest score acquired by the score acquiring unit; and
     an output unit that outputs the target language sentence acquired by the target language sentence acquiring unit.

2.  The translation apparatus according to claim 1,

wherein, in the parameter storage unit, a weight matrix M (u×K-dimensional) and a u-dimensional bias vector B, which are parameters used for calculating the local score, are also stored,
the first feature function information is information indicating "h(f,e,d)" (f: source language sentence, e: target language sentence, d: derivation, h: K-dimensional feature function),
the second feature function information is information indicating "h'(r)" (r: one element contained in the derivation d, h': K-dimensional feature function), and
the score acquiring unit calculates the non-local score using the formula "$W^T \cdot h(f,e,d)$", using the first feature function information (h(f,e,d)) and the first weight vector (W), calculates, for each element (r) of the derivation d, the local score using the formula "$W^T \cdot \sigma (M \cdot h'(r) + B)$" (where σ refers to u sigmoid functions in units of each element), using the second feature function information (W') and the second weight vector "h'(r)", and acquires scores of two or more target language sentences, using Equation 14:

$$W^{T.} \cdot h(f,e,d) + \sum_{r \in d} W'^{T.} \cdot \sigma(M \cdot h'(r) + B)$$

Equation 14.

3. A storage medium in which a program is stored,
the program causing the storage medium to have: a parameter storage unit in which a first weight vector, which is a weight vector that is applied to a non-local feature function, and a second weight vector, which is a weight vector that is applied to a local feature function, can be stored; a feature function information storage unit in which first feature function information, which is information regarding a non-local feature function, and second feature function information, which is information regarding a local feature function, can be stored; and a portion pair information storage unit in which two or more pieces of portion pair information, each having source language portion information forming a portion of a source language sentence and target language portion information forming a portion of a target language sentence, can be stored; and
causing a computer to execute:

an accepting step of accepting a source language sentence;
a vector acquiring step of acquiring a first vector by applying, to a non-local feature function indicated by the first feature function information, the source language sentence accepted in the accepting step and the one or more pieces of portion pair information stored in the portion pair information storage unit, and acquiring a second vector by applying, to a local feature function indicated by the second feature function information, one or more words forming the source language sentence accepted in the accepting step and the one or more pieces of portion pair information stored in the portion pair information storage unit;
a score acquiring step of calculating a non-local score, which is a score that is non-local, using the first vector acquired in the vector acquiring step and the first weight vector, calculating a local score, which is a score that is local, using the second vector acquired in the vector acquiring step and the second weight vector, and acquiring scores of two or more target language sentences corresponding to the source language sentence accepted in the accepting step, using the non-local score and the local score;
a target language sentence acquiring step of acquiring a target language sentence with the largest score acquired in the score acquiring step; and
an output step of outputting the target language sentence acquired in the target language sentence acquiring step.

4. A translation method, using a storage medium having: a parameter storage unit in which a first weight vector, which is a weight vector that is applied to a non-local feature function, and a second weight vector, which is a weight vector that is applied to a local feature function, can be stored; a feature function information storage unit in which first feature function information, which is information regarding a non-local feature function, and second feature function information, which is information regarding a local feature function, can be stored; and a portion pair information storage unit in which two or more pieces of portion pair information, each having source language portion information forming a portion of a source language sentence and target language portion information forming a portion of a target language sentence, can be stored; and realized by an accepting unit, a vector acquiring unit, a score acquiring unit, a target language sentence acquiring unit, and an output unit, the method comprising:

an accepting step of the accepting unit accepting a source language sentence;
a vector acquiring step of the vector acquiring unit acquiring a first vector by applying, to a non-local feature function indicated by the first feature function information, the source language sentence accepted in the accepting step and the one or more pieces of portion pair information stored in the portion pair information storage unit, and acquiring a second vector by applying, to a local feature function indicated by the second feature function information, one or more words forming the source language sentence accepted by the accepting unit and the one or more pieces of portion pair information stored in the portion pair information storage unit;

a score acquiring step of the score acquiring unit calculating a non-local score, which is a score that is non-local, using the first vector acquired in the vector acquiring step and the first weight vector, calculating a local score, which is a score that is local, using the second vector acquired in the vector acquiring step and the second weight vector, and acquiring scores of two or more target language sentences corresponding to the source language sentence accepted by the accepting unit, using the non-local score and the local score;

a target language sentence acquiring step of the target language sentence acquiring unit acquiring a target language sentence with the largest score acquired in the score acquiring step; and

an output step of the output unit outputting the target language sentence acquired in the target language sentence acquiring step.

5. A learning apparatus, comprising:

a parameter storage unit in which a first weight vector (W), which is a weight vector that is applied to a non-local feature function, a second weight vector (W'), which is a weight vector that is applied to a local feature function, and a weight matrix M ($u \times K$-dimensional) and a u-dimensional bias vector B used for calculating a local score, can be stored;

an objective function information storage unit in which objective function information, which is information regarding an objective function that is to be maximized for training, can be stored;

a first learning unit that performs learning so as to optimize an objective function indicated by the objective function information with "the second weight vector (W') = 0", thereby acquiring an initial first weight vector ($W_1$), which is an initial value of the first weight vector (W); and

a second learning unit that performs learning so as to optimize an objective function indicated by the objective function information, using the initial first weight vector ($W_1$) acquired by the first learning unit, thereby acquiring a weight matrix M and a vector B;

a third learning unit that performs learning so as to optimize an objective function indicated by the objective function information, using the M and B acquired by the second learning unit, thereby acquiring a first weight vector (W) and a second weight vector (W'); and

a parameter accumulating unit that accumulates the first weight vector (W) and the second weight vector (W') acquired by the third learning unit and the weight matrix M and the vector B acquired by the second learning unit, in the parameter storage unit.

6. A storage medium in which a program is stored,

the program causing the storage medium to have: a parameter storage unit in which a first weight vector (W), which is a weight vector that is applied to a non-local feature function, a second weight vector (W'), which is a weight vector that is applied to a local feature function, and a weight matrix M ($u \times K$-dimensional) and a u-dimensional bias vector B used for calculating a local score, can be stored; and an objective function information storage unit in which objective function information, which is information regarding an objective function that is to be maximized for training, can be stored; and

causing a computer to execute:

a first learning step of performing learning so as to optimize an objective function indicated by the objective function information with "the second weight vector (W') = 0", thereby acquiring an initial first weight vector ($W_1$), which is an initial value of the first weight vector (W);

a second learning step of performing learning so as to optimize an objective function indicated by the objective function information, using the initial first weight vector ($W_1$) acquired in the first learning step, thereby acquiring a weight matrix M and a vector B;

a third learning step of performing learning so as to optimize an objective function indicated by the objective function information, using the M and B acquired in the second learning step, thereby acquiring a first weight vector (W) and a second weight vector (W');

a parameter accumulating step of accumulating the first weight vector (W) and the second weight vector (W') acquired in the third learning step and the weight matrix M and the vector B acquired in the second learning step, in the parameter storage unit.

Translation apparatus    14

Accepting unit

15
Vector acquiring unit

16
Score acquiring unit

17
Target language
sentence acquiring unit

18
Output unit

11
Parameter
storage unit

12
Feature function
information storage unit

13
Portion pair
information storage unit

1

FIG.1

Start

S201 — Accepted source language sentence f ? → N

↓ Y

S202 — Perform initial processing

S203 — i ← 1

S204 — Is there i-th element candidate in source language sentence f? → N

↓ Y

S205 — Acquire one or more element candidates in candidate for target language sentence e

S206 — Acquire non-local feature

S207 — Acquire first vector

S208 — Acquire local feature

S209 — Acquire second vector

S210 — Calculate score

S211 — i ← i + 1

S212 — Acquire target language sentence e with largest score

S213 — Output target language sentence e

**FIG.2**

| Chinese-to-English | | | | |
|---|---|---|---|---|
| | | NIST05 | NIST06 | NIST08 |
| L-Hiero | MERT | 25.10[+] | 24.46[+] | 17.42[+] |
| | PRO | 25.57[+] | 25.27[+] | 18.33[+] |
| L-Hiero-E | PRO | 24.80[+] | 24.46[+] | 18.20[+] |
| AdNN-Heiro-E | | 26.37 | 25.93 | 19.42 |
| Japanese-to-English | | | | |
| | | test2 | test3 | test4 |
| L-Hiero | MERT | 24.35[+] | 25.62[+] | 23.68[+] |
| | PRO | 24.38[+] | 25.55[+] | 23.66[+] |
| L-Hiero-E | PRO | 24.47[+] | 25.86[+] | 24.03[+] |
| AdNN-Heiro-E | | 25.14 | 26.32 | 24.45 |

# FIG.3

| Chinese-to-English | | | |
|---|---|---|---|
| | NIST05 | NIST06 | NIST08 |
| L-Hiero | 25.57[+] | 25.27[+] | 18.33[+] |
| AdNN-Heiro-E | 26.37 | 25.93 | 19.42 |
| AdNN-Heiro-D | 26.21 | 26.07 | 19.54 |
| Japanese-to-English | | | |
| | test2 | test3 | test4 |
| L-Hiero | 24.38 | 25.55 | 23.66 |
| AdNN-Heiro-E | 25.14[+] | 26.32[+] | 24.45[+] |
| AdNN-Heiro-D | 24.42 | 25.46 | 23.73 |

# FIG.4

Learning apparatus

23
First learning unit

24
Second learning unit

25
Third learning unit

26
Parameter accumulating unit

21
Translation corpus
storage unit

22
Objective function
information storage unit

11
Parameter
storage unit

2

**FIG.5**

**FIG.6**

FIG.7

FIG.8

# FIG.9

## INTERNATIONAL SEARCH REPORT

| International application No. |
|---|
| PCT/JP2014/063667 |

A. CLASSIFICATION OF SUBJECT MATTER
*G06F17/28*(2006.01)i

According to International Patent Classification (IPC) or to both national classification and IPC

B. FIELDS SEARCHED

Minimum documentation searched (classification system followed by classification symbols)
G06F17/28

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-003642 A (Nippon Telegraph and Telephone Corp.), 08 January 2009 (08.01.2009), entire text; all drawings (Family: none) | 1-6 |
| A | Taro WATANABE, "Field of Statistical Machine Translation", Journal of Japanese Society for Artificial Intelligence, 01 May 2012 (01.05. 2012), vol.27, no.3, pages 288 to 295 | 1-6 |
| P,A | WO 2014/073260 A1 (NEC Corp.), 15 May 2014 (15.05.2014), entire text; all drawings (Family: none) | 1-6 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 July, 2014 (23.07.14) | 05 August, 2014 (05.08.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Beyond log-linear models: Boosted minimum error rate training for n-best reranking. **KEVIN DUH ; KATRIN KIRCHHOFF.** Proceedings of ACL-08: HLT, Short Papers. Association for Computational Linguistics, June 2008, 37-40
- **A. SOKOLOV ; G. WISNIEWSKI ; F. YVON.** Non-linear n-best list reranking with few features. *AMTA,* 2012
- **M. ASUNCION CASTANO ; FRANCISCO CASACUBERTA ; ENRIQUE VIDAL.** Machine translation using neural networks and finite-state models. *TMI,* 1997, 160-167
- Continuous space translation models with neural networks. **LE HAI SON ; ALEXANDRE ALLAUZEN ; FRANCOIS YVON.** Proceedings of the 2012 Conference of the North American Chapter of the Association for Computational Linguistics: Human Language Technologies, NAACL HLT'12. Association for Computational Linguistics, 2012, 39-48
- Continuous space translation models for phrase-based statistical machine translation. **HOLGER SCHWENK.** Proceedings of the 24th International Conference on Computational Linguistics, COLING'12, Mumbai, India. Association for Computational Linguistics, 2012
- **ATSUSHI FUJII ; MASAO UTIYAMA ; MIKIO YAMAMOTO ; TAKEHITO UTSURO.** Overview of the patent translation task at the ntcir-8 workshop. *Proceedings of the 8th NTCIR Workshop Meeting on Evaluation of Information Access Technologies: Information Retrieval, Question Answering and Cross-lingual Information Access,* 2010, 293-302
- Improved statistical alignment models. **FRANZ JOSEF OCH ; HERMANN NEY.** Proceedings of the 38th Annual Meeting on Association for Computational Linguistics, ACL'00. Association for Computational Linguistics, 2000, 440-447
- **ANDREAS STOLCKE.** Srilm - an extensible language modeling toolkit. *Proc. of ICSLP,* 2002
- BLEU: a method for automatic evaluation of machine translation. **KISHORE PAPINENI ; SALIM ROUKOS ; TODD WARD ; WEI-JING ZHU.** Proceedings of 40th Annual Meeting of the Association for Computational Linguistics. Association for Computational Linguistics, 2002, 311-318
- **PHILIPP KOEHN.** Statistical significance tests for machine translation evaluation. *Proc. of EMNLP.ACL.,* 2004
- A hierarchical phrase-based model for statistical machine translation. **DAVID CHIANG.** Proceedings of the 43rd Annual Meeting on Association for Computational Linguistics, ACL'05. Association for Computational Linguistics, 2005, 263-270
- Minimum error rate training in statistical machine translation. **FRANZ JOSEF OCH.** Proceedings of the 41st Annual Meeting of the Association for Computational Linguistics. Association for Computational Linguistics, 2003, 160-167
- Online large-margin training for statistical machine translation. **TARO WATANABE ; JUN SUZUKI ; HAJIME TSUKADA ; HIDEKI ISOZAKI.** Proceedings of the 2007 Joint Conference on Empirical Methods in Natural Language Processing and Computational Natural Language Learning (EMNLP-CoNLL). Association for Computational Linguistics, 764-773
- Tuning as ranking. **MARK HOPKINS ; JONATHAN MAY.** Proceedings of the 2011 Conference on Empirical Methods in Natural Language Processing. Association for Computational Linguistics, July 2011, 1352-1362